# EUROPÄISCHE PATENTSCHRIFT

(11) **EP 2 887 506 B1**
(45) Veröffentlichungstag und Bekanntmachung des Hinweises auf die Patenterteilung: **06.12.2017**
(21) Anmeldenummer: 14188264.7
(22) Anmeldetag: 09.10.2014
(51) Int. Cl.: H02K 5/04

(54) **Drehmomentstütze**
Torque support
Support de couple

(30) Priorität: 16.12.2013 AT 508332013
(43) Veröffentlichungstag der Anmeldung: 24.06.2015
(73) Patentinhaber: B&R Industrial Automation GmbH, 5142 Eggelsberg (AT)
(72) Erfinder: Albrecht, Manfred, 5142 Eggelsberg (AT)
(74) Vertreter: Patentanwälte Pinter & Weiss OG

(56) Entgegenhaltungen:
- EP-A2- 0 924 338

## Beschreibung

Die gegenständliche Erfindung betrifft eine Drehmomentenstütze mit einem ersten Ende und einem zweiten Ende, wobei am zweiten Ende ein Verbindungsteil vorgesehen ist und am eine Führungsbuchse, die in einer Ausnehmung am zweiten Ende angeordnet ist, und ein Verbindungszapfen vorgesehen sind, wobei in radialer Richtung zwischen Führungsbuchse und Ausnehmung ein Spalt vorgesehen ist.

Wenn ein Elektromotor nur auf eine Welle des anzutreibenden Bauteils aufgesteckt wird, ohne drehmomentenfest, z.B. über einen Verbindungsflansch, mit diesem Bauteil verbunden zu werden, muss das entstehende Reaktionsdrehmoment des Elektromotors irgendwie abgestützt werden, um zu verhindern, dass sich der Elektromotor selbst um die eigene Achse dreht. Dazu werden sogenannten Drehmomentenstützen eingesetzt, über die der Elektromotor mit einem ortsfesten Bauteil zur Aufnahme des Reaktionsdrehmoments verbunden wird.

In der EP 924 338 A2 ist eine Drehmomentenstütze beschrieben, bei der eine Verbindungsschraube in ein Getriebegehäuse geschraubt wird, womit eine Buchse, die mit Spiel in einer Ausnehmung der Drehmomentenstütze angeordnet ist, über einen Kragen verklemmt wird. Um ein Kippen der Drehmomentenstütze zu ermöglich ist vorgesehen, zwischen den Kragen und der Drehmomentenstütze eine Feder anzuordnen. Das ermöglicht ein Abheben der Drehmomentenstütze von dem Getriebegehäuse. Für die Krafteinleitung dient eine separate Nut-Feder-Verbindung, die für die Kraftübertragung sorgt. Das macht die Konstruktion der Drehmomentenstütze relativ aufwendig.

Die DE 10 2011 011 853 A1 zeigt eine Drehmomentenstütze mit einer Gelenklageranordnung, mit der die Drehmomentenstütze von einem Fahrzeugrahmen schwingungstechnisch abgekoppelt werden kann. In der Gelenklageranordnung ist dazu ein in alle Richtungen wirkendes Federelement vorgesehen, das als Dämpfung wirkt. Zusätzlich ermöglicht die Gelenklageranordnung durch das nachgiebige Federelement auch einen Toleranzausgleich, mit dem ein radialer Versatz durch einen seitlichen Kippwinkel ausgeglichen werden kann.

Ein Toleranzausgleich an der Drehmomentenstütze um allfällige Fluchtungsfehler der Antriebswelle zur Tragstruktur oder Wärmeausdehnungen auszugleichen ist an sich erforderlich und erwünscht. Ein Federelement zur Schwingungsabkopplung ist aber in einer normalen Drehmomentenstütze für eine Antriebseinheit unerwünscht, da dort eine möglichst spielfreie Krafteinleitung in die Tragstruktur gefordert ist. Ein solches Federelement in der Drehmomentenstütze wie in der DE 10 2011 011 853 A1 beschrieben wäre hierzu kontraproduktiv.

Es ist daher eine Aufgabe der gegenständlichen Erfindung, eine Drehmomentenstütze anzugeben, die eine möglichst spielfreie Krafteinleitung in die Tragstruktur und trotzdem einen ausreichenden Toleranzausgleich ermöglicht.

Diese Aufgabe wird erfindungsgemäß dadurch gelöst, dass der Verbindungszapfen in der Führungsbuchse schwenkbar gelagert angeordnet ist und die Führungsbuchse in tangentialer Richtung spielfrei in der Ausnehmung angeordnet ist. Auf diese Weise kann das entstehende Reaktionsdrehmoment bzw. die entstehende Reaktionskraft in tangentialer Richtung spielfrei in eine Tragstruktur eingeleitet werden, wobei in radialer Richtung weiter ein Toleranzausgleich ermöglicht ist. Die die schwenkbare Lagerung des Verbindungzapfens in der Führungsbuchse ist darüber hinaus auch gewisser Winkelversatz ausgleichbar. Damit kann sowohl der geforderte Toleranzausgleich, als auch die spielfreie Krafteinleitung sichergestellt werden.

Die schwenkbare Lagerung des Verbindungszapfens in der Führungsbuchse wird vorteilhafterweise mit einem Gelenklager realisiert, wobei der Außenteil des Gelenklagers in der Führungsbuchse gelagert ist und am Innenteil des Gelenklagers der Verbindungszapfen angeordnet ist. Solche Gelenklager sind Standardbauteile, die einfach und kostengünstig eingesetzt werden können.

Der Verbindungszapfen wird auf konstruktiv einfache Weise mittels eines Zapfenhalteteils axial mit dem Innenteil des Gelenklagers verklemmt, um den Verbindungszapfen im Gelenklager zu halten.

Die Führungsbuchse wird auf konstruktiv einfache Weise mittels eines Lagerhalteteils axial mit dem Außenteil des Gelenklagers und mit der Drehmomentenstütze verklemmt, womit sowohl das Gelenklager in der Führungsbuchse, als auch die Führungsbuchse in der Ausnehmung der Drehmomentenstütze gehalten werden kann.

Um mögliche unerwünschte Schwingungen der Drehmomentenstütze dämpfen zu können, ohne die spielfreie Krafteinleitung zu beeinträchtigen, ist vorzugsweise axial zwischen Drehmomentenstütze und Lagerhalteteil oder Führungsbuchse ein Dämpfungselement angeordnet.

Die gegenständliche Erfindung wird nachfolgend unter Bezugnahme auf die Figuren 1 bis 4 näher erläutert, die beispielhaft, schematisch und nicht einschränkend vorteilhafte Ausgestaltungen der Erfindung zeigen. Dabei zeigt
Fig.1 eine Antriebseinheit mit Elektromotor mit Drehmomentenstütze und Antriebsteil,
Fig.2 eine perspektivische Darstellung von Elektromotor mit Drehmomentenstütze,
Fig.3 einen Schnitt durch die Drehmomentenstütze in radialer Richtung und
Fig.4 einen Schnitt durch die Drehmomentenstütze in tangentialer Richtung.

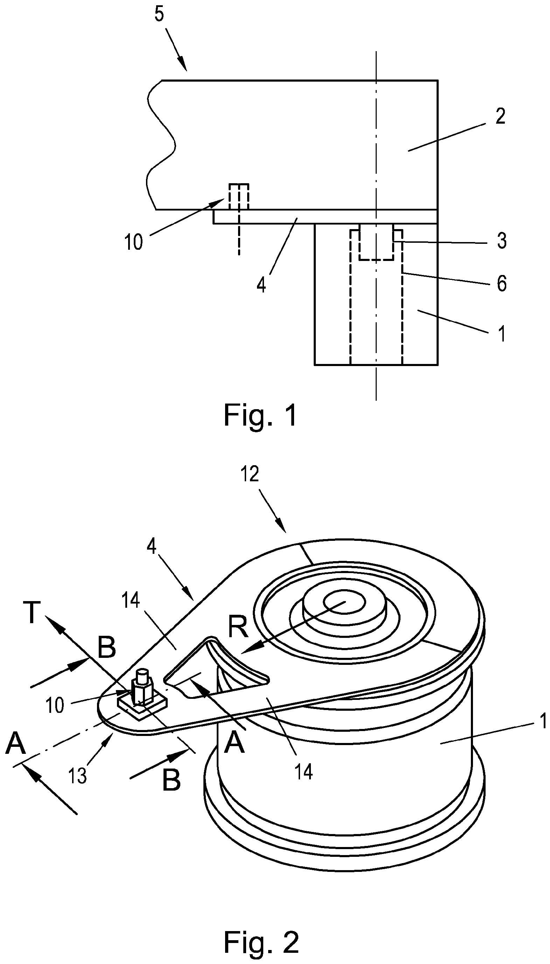

In Fig.1 ist eine Antriebseinheit mit einem Elektromotor 1 und einem Antriebsteil 2, der vom Elektromotor 1 angetrieben ist, dargestellt. Der Elektromotor 1 wird hierzu auf eine Antriebswelle 3 des Antriebsteiles 2 aufgesteckt und mit einem Spannelement an einem ortsfesten Bauteil 5 oder mit einer zentralen Schraube durch die Motorwelle 6 mit der Antriebswelle 3 verbunden. Die Verbindung ist dabei aber nicht drehmomentenfest, d.h. dass die Verbindung die entstehenden Reaktionsdrehmomente nicht oder nicht gänzlich übertragen kann. Um zu verhindern, dass sich der Elektromotor 1 aufgrund der entstehenden Reaktionsdrehmomente um die eigene Achse dreht, ist eine Drehmomentenstütze 4 vorgesehen, die mit einem Ende am Elektromotor 1 und mit dem anderen Ende am ortsfesten Bauteil 5, z.B. dem Gehäuse des Antriebsteils 2 oder einer ortsfesten Tragstruktur für den Antriebsteil 2, befestigt ist.

In Fig.2 ist der Elektromotor 1 mit der Drehmomentenstütze 4 dargestellt. Die Drehmomentenstütze 4 ist mit einem ersten Ende 12 am Elektromotor 1 drehfest verbunden, z.B. mittels nicht dargestellter Schrauben. An einem zweiten Ende 13 der Drehmomentenstütze 4 ist ein Verbindungsteil 10 angeordnet, mit dem die Drehmomentenstütze 4 mit dem ortsfesten Bauteil 5 verbunden wird. Das erste Ende 12 und das zweite Ende 13 der Drehmomentenstütze 4 sind durch eine starre Verbindungsstrebe 14 miteinander verbunden. Im gezeigten Ausführungsbeispiel ist die Drehmomentenstütze 4 V-förmig, mit zwei Verbindungsstreben 14 ausgeführt.

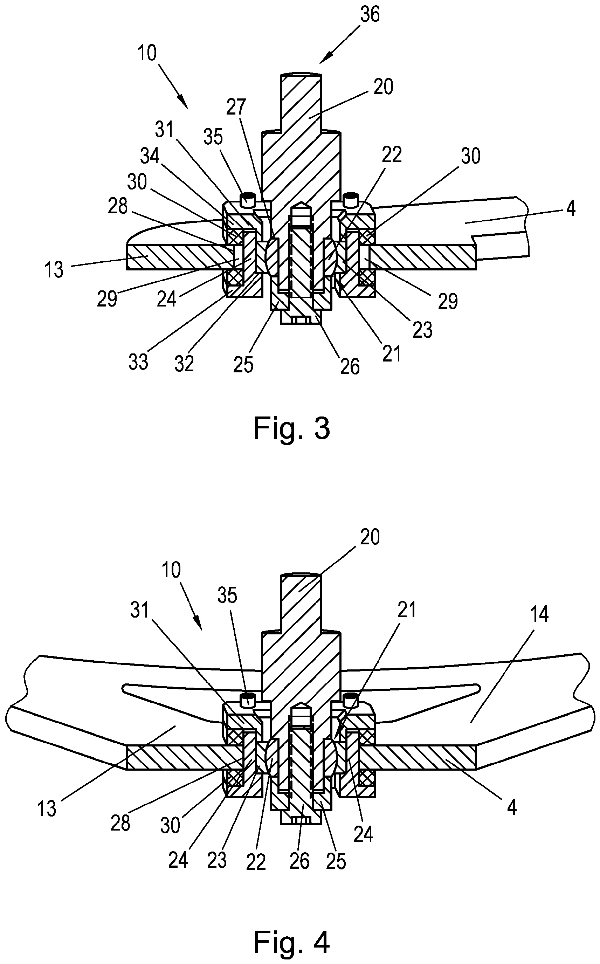

Um die entstehende Kraft (aus Drehmoment des Elektromotors 1 und Länge zwischen Drehachse des Elektromotors 1 und der Achse des Verbindungsteils 10) in Kraftrichtung spielfrei in den ortsfesten Bauteil 5 einleiten zu können, ist am dem Elektromotor 1 abgewandten zweiten Ende 13 der Drehmomentenstütze 4 ein Verbindungsteil 10 angeordnet, mit dem die Drehmomentenstütze 4 mit dem ortsfesten Bauteil 5 verbunden wird. Dieser Verbindungsteil 10 wird nachfolgend mit Bezugnahme auf die Figuren 3 und 4, die verschiedene Schnitte durch den Verbindungsteil 10 zeigen, erläutert. Fig.3 zeigt einen Schnitt A-A in radialer Richtung R und Fig.4 einen Schnitt B-B in tangentialer Richtung T durch den Verbindungsteil 10, wobei sich die Richtungen radial und tangential auf die Motorwelle 6 bzw. die Antriebwelle 3 beziehen.

Der Verbindungsteil 10 umfasst eine Führungsbuchse 24, in der ein Verbindungszapfen 20, relativ zu seiner Längsachse schwenkbar gelagert angeordnet ist, bevorzugt in alle Richtungen schwenkbar. Im gezeigten Ausführungsbeispiel ist in der Führungsbuchse 24 ein Gelenklager 21 angeordnet, wobei der Verbindungszapfen 20 am Innenteil 22 des Gelenklagers 21 angeordnet und damit verbunden ist. Der zugehörige Außenteil 23 des Gelenklagers 21 ist in der Führungsbuchse 24 angeordnet. Die Führungsbuchse 24 ist in einer Ausnehmung 28 in der Drehmomentenstütze 4, hier in deren zweitem Ende 13, befestigt. Das Gelenklager 21 kann ein wartungsfreies oder ein geschmiertes Lager sein.

Anstelle eines Gelenklagers 21 kann aber auch jede andere Konstruktion gewählt werden, die nur ein Verschwenken des Verbindungszapfens 20 zulässt.

Das freie Ende 36 des Verbindungszapfens 20 wird bei Montage der Drehmomentenstütze 4 in einer Antriebseinheit in eine Ausnehmung im ortsfesten Bauteil 5 gesteckt, wie in Fig.1 angedeutet. Es ist eine Selbstverständlichkeit, dass das freie Ende 36 des Verbindungszapfens 20 dabei spielfrei im ortsfesten Bauteil 5 angeordnet ist.

Um den Verbindungszapfen 20 am Innenteil 22 zu befestigen ist der Verbindungszapfen 20 hier in den Innenteil 22 gesteckt und mittels eines, axial am Innenteil 22 und am Verbindungszapfen 20 anliegenden Zapfenhalteteils 25 und einer Schraube 26 im Verbindungszapfen 20 mit dem Innenteil 22 verklemmt. Der Verbindungszapfen 20 weist hierzu eine entsprechende Schulter 27 auf, an der der Innenteil 22 axial anliegt.

Die Führungsbuchse 24 und/oder die Ausnehmung 28 zur Aufnahme der Führungsbuchse 24 ist so ausgeführt, dass die Führungsbuchse 24 in tangentialer Richtung T, also in Kraftrichtung, spielfrei (im Sinne einer geringen Spielpassung oder einer Übergangspassung) in der Ausnehmung 28 aufgenommen ist (Fig.4), während in radialer Richtung R zwischen Führungsbuchse 24 und Drehmomentenstütze 4 ein Spalt 29 vorgesehen ist (Fig.3). Die Führungsbuchse 24 kann dazu quadratisch ausgeführt sein und in einer rechteckigen Ausnehmung 28, oder umgekehrt, angeordnet sein. Ebenso wäre eine ovale Führungsbuchse 24 und eine kreisrunde Ausnehmung 28, oder umgekehrt, denkbar. Daneben gibt es natürlich noch eine Fülle weiterer geometrischer Formenkombinationen, die Spielfreiheit in einer Richtung und Spiel in einer um 90° verdrehten Richtung ermöglichen.

Damit ist die Führungsbuchse 24 in der Ausnehmung 28 in radialer Richtung R beweglich angeordnet, während in tangentialer Richtung T keine Bewegung zugelassen wird. Das ermöglicht einerseits eine spielfreie Krafteinleitung in den ortsfesten Bauteil 5, da das Reaktionsdrehmoment eine Tangentialkraft am Verbindungsteil 10 erzeugt. Andererseits ist durch den Spalt 29 trotzdem ein Toleranzausgleich in radialer Richtung R möglich. Über den Verbindungszapfen 20 ist darüber hinaus auch eine Bewegung der Drehmomentenstütze 4 in Richtung der Längsachse des Verbindungszapfens 20 möglich, was ebenfalls für einen Toleranzausgleich genutzt werden kann.

Zusätzlich kann durch den verschwenkbar angeordneten Verbindungszapfen 20 auch ein gewisser Winkelversatz zwischen Längsachse der Motorwelle 6 bzw. der Antriebswelle 3 und der Längsachse des Verbindungszapfen 20, die an sich parallel sein sollten, ausgeglichen werden.

Zur Befestigung der Führungsbuchse 24 an der Drehmomentenstütze 4 kann an der Führungsbuchse 24 an deren innenliegender Umfangsfläche eine Schulter 32 vorgesehen sein, an der der Außenteil 23 des Gelenklagers 21 axial anliegt. An der gegenüber liegenden Stirnseite des Außenteils 23 liegt ein Lagerhalteteil 31 axial an, der mittels Schrauben 35 an der Führungsbuchse 24 befestigt ist. An der Führungsbuchse 24 und am Lagerhalteteil 31 sind aus der jeweiligen äußeren Umfangsfläche radial vorspringende Schultern 33, 34 vorgesehen, über die die Führungsbuchse 24 mit dem Lagerhalteteil 31 mit der Drehmomentenstütze 4 verklemmt werden kann. Die Klemmung darf allerdings nur stark sein, dass noch eine radiale Bewegung der Führungsbuchse 24 in der Ausnehmung 28 möglich ist.

Axial zwischen den Schultern 33, 34 an der Führungsbuchse 24 und/oder am Lagerhalteteil 31 kann auch ein Dämpfungselement 30 angeordnet sein, um ein mögliches Schwingen der Drehmomentenstütze 4 zu reduzieren. Das Dämpfungselement 30 beeinflusst aber nicht die in tangentialer Richtung spielfreie Ankopplung des Verbindungsteils 10 am ortsfesten Bauteil 5 und damit auch nicht die spielfreie Krafteinleitung in den ortsfesten Bauteil 5.

## Patentansprüche

1. Drehmomentenstütze mit einem ersten Ende (12) und einem zweiten Ende (13), wobei am zweiten Ende (13) ein Verbindungsteil (10) vorgesehen ist und am Verbindungsteil (10) eine Führungsbuchse (24), die in einer Ausnehmung (28) am zweiten Ende (13) angeordnet ist, und ein Verbindungszapfen (20) vorgesehen sind, wobei in radialer Richtung (R) zwischen Führungsbuchse (24) und Ausnehmung (28) ein Spalt (29) vorgesehen ist, **dadurch gekennzeichnet, dass** der Verbindungszapfen (20) in der Führungsbuchse (24) schwenkbar gelagert angeordnet ist und die Führungsbuchse (24) in tangentialer Richtung (T) spielfrei in der Ausnehmung (28) angeordnet ist.

2. Drehmomentenstütze nach Anspruch 1, **dadurch gekennzeichnet, dass** in der Führungsbuchse (24) ein Gelenklager (21) angeordnet ist, wobei der Außenteil (23) des Gelenklagers in der Führungsbuchse (24) gelagert ist und am Innenteil (22) des Gelenklagers (21) der Verbindungszapfen (20) angeordnet ist.

3. Drehmomentenstütze nach Anspruch 2, **dadurch gekennzeichnet, dass** der Verbindungszapfen (20) mittels eines Zapfenhalteteils (25) axial mit dem Innenteil (22) des Gelenklagers (21) verklemmt ist.

4. Drehmomentenstütze nach Anspruch 2, **dadurch gekennzeichnet, dass** die Führungsbuchse (24) mittels eines Lagerhalteteils (31) axial mit dem Außenteil (23) des Gelenklagers (21) und mit der Drehmomentenstütze (4) verklemmt ist.

5. Drehmomentenstütze nach Anspruch 4, **dadurch gekennzeichnet, dass** axial zwischen Drehmomentenstütze (4) und Lagerhalteteil (31) und/oder axial zwischen Drehmomentenstütze (4) und Führungsbuchse (24) ein Dämpfungselement (30) angeordnet ist.

6. Antriebseinheit mit einem Elektromotor (1), der einen Antriebsteil (2) antreibt, und einer Drehmomentenstütze (4) nach einem der Ansprüche 1 bis 5, wobei das erste Ende (12) der Drehmomentenstütze (4) am Elektromotor (1) befestigt ist und der Verbindungsteil (10) in einem ortsfesten Bauteil (5) der Antriebseinheit angeordnet ist.

## Claims

1. A torque support having a first end (12) and a second end (13), wherein a connecting part (10) is provided on the second end (13) and a guide bushing (24) which is arranged in a recess (28) on the second end (13) and a connecting pin (20) are provided on the connecting part (10), whereas a gap (29) being provided in the radial direction (R) between the guide bushing (24) and the recess (28), **characterized in that** the connecting pin (20) is pivotably mounted in the guide bushing (24) and the guide bushing (24) being arranged in the tangential direction (T) in a play-free arrangement in the recess (28).

2. The torque support according to claim 1, **characterized in that** a spherical bearing (21) is arranged in the guide bushing (24), the exterior part (23) of the spherical bearing being mounted in the guide bushing (24) and the connecting pin (20) being arranged on the interior part (22) of the spherical bearing (21).

3. The torque support according to claim 2, **characterized in that** the connecting pin (20) is clamped axially to the interior part (22) of the spherical bearing (21) by means of a pin retaining part (25).

4. The torque support according to claim 2, **characterized in that** the guide bushing (24) is clamped axially to the exterior part (23) of the spherical bearing (21) and to the torque support (4) by means of a bearing retaining part (31).

5. The torque support according to claim 4, **characterized in that** a damping element (30) is arranged axially between the torque support (4) and the bearing retaining part (31) and/or axially between the torque support (4) and the guide bushing (24).

6. A drive unit having an electric motor (1) that drives a drive part (2) and a torque support (4) according to any one of claims 1 to 5, wherein the first end (12) of the torque support (4) is fastened to the electric motor (1), and the connecting part (10) is arranged in a stationary component (5) of the drive unit.

## Revendications

1. Support de couple avec une première extrémité (12) et une seconde extrémité (13), dans lequel il est prévu à la seconde extrémité (13) une partie de liaison (10) et sur la partie de liaison (10), il est prévu une douille de guidage (24), qui est agencée dans un évidement (28) à la seconde extrémité (13), et un pivot de liaison (20), dans lequel il est prévu dans la direction radiale (R) un intervalle (29) entre la douille de guidage (24) et l'évidement (28), **caractérisé en ce que** le pivot de liaison (20) est monté à pivotement dans la douille de guidage (24) et la douille de guidage (24) est agencée sans jeu dans la direction tangentielle (T) dans l'évidement (28).

2. Support de couple selon la revendication 1, **caractérisé en ce qu'**une rotule d'articulation (21) est agencée dans la douille de guidage (24), dans lequel la partie externe (23) de la rotule d'articulation est montée dans la douille de guidage (24) et est agencée sur la partie interne (22) de la rotule d'articulation (21) du pivot de liaison (20).

3. Support de couple selon la revendication 2, **caractérisé en ce que** le pivot de liaison (20) est bloqué axialement au moyen d'une partie de retenue de pivot (25) avec la partie interne (22) de la rotule d'articulation (21).

4. Support de couple selon la revendication 2, **caractérisé en ce que** la douille de guidage (24) est bloquée axialement au moyen d'une partie de retenue de rotule (31) avec la partie externe (23) de la rotule d'articulation (21) et avec le support de couple (4).

5. Support de couple selon la revendication 4, **caractérisé en ce qu'**un élément d'amortissement (30) est agencé axialement entre le support de couple (4) et la partie de retenue de rotule (31) et/ou axialement entre le support de couple (4) et la douille de guidage (24).

6. Unité d'entraînement avec un moteur électrique (1), qui commande une partie d'entraînement (2), et un support de couple (4) selon l'une quelconque des revendications 1 à 5, dans laquelle la première extrémité (12) du support de couple (4) est fixée sur le moteur électrique (1) et la partie de liaison (10) est agencée dans un composant fixe (5) de l'unité d'entraînement.
